(19) Europäisches Patentamt

European Patent Office

Office européen des brevets

(11) **EP 1 029 031 B1**

(12) **EUROPÄISCHE PATENTSCHRIFT**

(45) Veröffentlichungstag und Bekanntmachung des Hinweises auf die Patenterteilung:
**12.06.2002  Patentblatt 2002/24**

(21) Anmeldenummer: **98952734.6**

(22) Anmeldetag: **22.10.1998**

(51) Int Cl.[7]: **C10M 175/00**

(86) Internationale Anmeldenummer:
**PCT/EP98/06708**

(87) Internationale Veröffentlichungsnummer:
**WO 99/21946 (06.05.1999 Gazette 1999/18)**

(54) **REGENERIERUNG SAURER REAKTIONSSCHMIERMITTELRESTE**

REGENERATION OF ACID REACTION LUBRICANT RESIDUES

REGENERATION DE RESIDUS DE LUBRIFIANTS REACTIONNELS ACIDES

(84) Benannte Vertragsstaaten:
**DE FR IT**

(30) Priorität: **29.10.1997  DE 19747681**

(43) Veröffentlichungstag der Anmeldung:
**23.08.2000  Patentblatt 2000/34**

(73) Patentinhaber: **Chemetall GmbH
60487 Frankfurt (DE)**

(72) Erfinder:
 • **NITTEL, Klaus-Dieter
   D-60431 Frankfurt am Main (DE)**
 • **RAU, Uwe
   D-61462 Königstein (DE)**
 • **SCHWINKE-KRUSE, Norbert
   D-63303 Dreieich (DE)**
 • **ZANDER, Karl-Heinz
   Somerset, MI 08873 (US)**
 • **SMITH, Noel
   Troy, MI 48098 (US)**

(74) Vertreter: **Uppena, Franz, Dr. et al
Dynamit Nobel AG
Patentabteilung,
Postfach 1261
53839 Troisdorf (DE)**

(56) Entgegenhaltungen:
   **EP-A- 0 341 802          EP-A- 0 597 803
   DE-A- 2 102 295**

 • **DATABASE WPI Section Ch, Week 8930 Derwent
   Publications Ltd., London, GB; Class A97, AN
   89-219284 XP002089530 & SU 1 437 413 A (BUISK
   CHEM WKS) , 15. November 1988**

EP 1 029 031 B1

**Beschreibung**

Die Erfindung betrifft ein Verfahren zur Regenerierung von bei der Kaltumformung abgestreiften, abgearbeiteten, sauren, organischen Schmierstoff sowie mehrwertige Metallionen und Phosphationen enthaltenden Reaktionsschmiermittelresten.

Saure Reaktionsschmiermittel besitzen einen öligen Charakter und zeichnen sich dadurch aus, daß sie neben einem organischen Gleitmittel Bestandteile enthalten, die zur Ausbildung eines Konversionsüberzuges auf der Oberfläche des umzuformenden Werkstückes befähigt sind (US-A-3 525 651, US-A-2 739 915, DE-B-21 02 295, EP-A-24 062, EP-A-25 236). Die in der Praxis mit Abstand wichtigsten Reaktionsschmiermittel enthalten als zur Ausbildung eines Konversionsüberzuges befähigte Komponente Phosphorsäure und/oder Phosphat mehrwertiger Metallionen. In Gegenwart von Phosphorsäure entstehen bei der Behandlung der umzuformenden Werkstücke im wesentlichen Eisenphosphatschichten, bei Verwendung von Phosphaten mehrwertiger Metallionen enthaltenden Reaktionsschmiermitteln Konversionsschichten aus Phosphaten der mehrwertigen Metalle. Die in der Regel im Tauchen applizierten Reaktionsschmiermittel erzeugen auf der Oberfläche des Werkstückes einen festverwachsenen Konversionsüberzug, der gewährleistet, daß bei der Umformung ein hohes Maß an Trennung von Werkstück und Umformwerkzeug erfolgt, andererseits eine feste Bindung des organischen Gleitmittels auf der Werkstückoberfläche gegeben ist.

Die unter Anwendung von Reaktionsschmiermitteln häufigste Kaltumformung geschieht durch Gleitziehen. Hierbei wird das überschüssige Reaktionsschmiermittel an der äußeren Ziehmatritze abgestreift. Sofern das Gleitziehen unter Verwendung eines Ziehstopfens erfolgt, wird zusätzlich überschüssiges Reaktionsschmiermittel aus dem Rohrinneren nach außen ausgetragen. Die auf diese Weise abgestreiften Reaktionsschmiermittelreste werden aufgefangen und in der Regel als Abfall entsorgt. Eine Wiederverwendung der abgestreiften Reaktionsschmiermittelreste ist deshalb nicht möglich, weil durch Temperatur- und Druckbelastung eine derartige Veränderung erfolgt ist, daß seine ursprüngliche Eigenschaft der Schichtausbildung gänzlich verloren gegangen ist. Zudem wird durch die beim Umformvorgang herrschenden Reibkräfte Metallabrieb erzeugt. Dieser liegt in Form ungelöster aber auch durch Reaktion mit weiteren Inhaltsstoffen des Reaktionsschmiermittels in gelöster Form als organische und anorganische Eisenverbindungen vor. Der Gehalt des Reaktionsschmiermittelrestes an metallischem Eisen verhindert durch Kratzerbildung auf den zu ziehenen Rohren dessen

Wiederverwendung. Darüber hinaus dicken organische Eisenverbindungen das Reaktionsschmiermittel derart ein, daß ein Tauch- oder Umlaufprozeß aufgrund eines hohen Schmiermittelverbrauches nicht mehr wirtschaftlich durchführbar ist.

Die vorgenannte Entsorgung der Reste von Reaktionsschmiermitteln geschieht üblicherweise durch Verbrennung. Hierbei entstehen jedoch nicht nur Verbrennungsprodukte, die für die Umwelt eine erhebliche Belastung darstellen können, sondern es werden an sich wertvolle Komponenten des Reaktionsschmiermittels vernichtet.

In EP-A-597803 ist ein Verfahren zum Reinigen (Regenerieren) von Walzölen beschrieben wobei Dimersäuren dem Schmutzöl zugesetzt werden und die koagulierten Abtriebpartikel dann abzentrifugiert werden.

Aufgabe der vorliegenden Erfindung ist es, ein Verfahren zur Regenerierung von bei der Kaltumformung abgestreiften, abgearbeiteten, sauren Reaktionsschmiermittelresten bereitzustellen, das die Wiederherstellung eines funktionsfähigen Reaktionsschmiermittels unter gleichzeitiger Verwendung eines wesentlichen Teiles der in den Reaktionsschmiermittelresten vorhandenen Komponenten gestattet.

Die Aufgabe wird gelöst, indem das Verfahren der eingangs genannten Art entsprechend der Erfindung derart ausgestaltet wird, daß man den Reaktionsschmiermittelresten, die die Verfahrensstufen

    a) Fällung von Metallionen aus metallorganischen Verbindungen durch Zugabe von Phosphorsäure und/oder sauren Phosphorsäureestern,

    b) Auflösen wasserlöslicher Verunreinigungen durch Zugabe von Wasser,

    c) Abtrennung der Schmierstoffkomponente von Feststoffen und von mit der öligen Schmiermittelkomponente unverträglichen wasserhaltigen Phasen

durchlaufen haben,

    d) sauren Phosphorsäureester zur Einstellung der Freien Säure auf einen Wert von mindestens 10 Punkten sowie zur Einstellung einer Gesamtsäurepunktzahl von mindestens 70 unter Einstellung eines Verhältnisses von Freier Säure : Gesamtsäure auf einen Wert im Bereich von 0,1 bis 0,5 zusetzt.

Je nach Beschaffenheit der abgestreiften Reaktionsschmiermittelreste empfiehlt es sich, eine Filtration vorzuschalten, um grobe Verunreinigungen zu entfernen. Hierzu wird zweckmäßigerweise vor der Filtration aufgeheizt, um die Viskosität der Reaktionsschmiermittelreste zu erniedrigen.

Nach der Behandlung durch Zugabe von Phosphorsäure und/oder sauren Phosphorsäureestern entsprechend Verfahrensstufe a) und Zugabe von Wasser entsprechend Verfahrensstufe b) erhält man ein mehrphasiges öliges Produkt, dessen einzelne Phasen die unterschiedlichen Verunreinigungen teilweise gemeinsam mit dem zurückzugewinnenden Wertstoff enthalten.

In der nachfolgenden Verfahrensstufe c) erfolgt die Abtrennung der Schmiermittelkomponente von Feststoffen und von mit der öligen Schmiermittelkomponente unverträglichen wasserhaltigen Phase mit Hilfe von Filtern, Dekantern, Separatoren, vorzugsweise jedoch mit Hilfe von Zentrifugen. Hierbei werden alle Feststoffe und alle mit der öligen Phase unverträglichen Phasen, wie z. B. die wäßrige oder wäßrig-saure Phase, sowie alle Phasen, welche in der Dichte über der des ursprünglich eingesetzten organischen Gleitmittels liegen, abgetrennt.

Gemäß einer bevorzugten Ausgestaltung der Erfindung erfolgt die Abtrennung entsprechend der Stufe c) mittels einer Zentrifuge bei 2000 bis 30000 g. Die Verwendung einer Zentrifuge mit 8000 bis 15000 g ist besonders vorteilhaft.

Als Ergebnis des Abtrennprozesses erhält man eine ölige Substanz, die im wesentlichen alle organischen Inhaltsstoffe des ursprünglichen Reaktionsschmiermittels enthält. Die für die Ausbildung des Konversionsüberzuges verantwortlichen Komponenten liegen jedoch im Unterschuß vor, da durch Reaktion während des Ziehvorganges ein erheblicher Teil der reaktiven Komponente des Reaktionsschmiermittels abgebaut worden ist. Zur Wiederherstellung des funktionsfähigen Reaktionsschmiermittels wird der nach Durchlaufen der Stufe c) erhaltenen öligen Schmiermittelkomponente saurer Phosphorsäureester zur Einstellung der Freien Säure auf einen Wert von mindestens 10 Punkten sowie zur Einstellung einer Gesamtsäurepunktzahl von mindestens 70 zugesetzt. Dabei ist darauf zu achten, daß ein Verhältnis von Freier Säure : Gesamtsäure auf einen Wert im Bereich von 0,1 bis 0,5 eingestellt wird. Gegebenenfalls kann es vorteilhaft sein, zur Einstellung der Freien Säure zusätzlich Phosphorsäure zuzusetzen.

Als Phosphorsäureester eignen sich insbesondere saure Ester von gesättigten oder ungesättigten Fettalkoholen, vorzugsweise mit einer Kettenlänge von 16 bis 22 C-Atomen.

Die Einstellung an Freier Säure bzw. Gesamtsäure erfolgt entsprechend der nachfolgenden Bestimmungsmethode:

Zur Titration der Freien Säure wird ca. 1 g des Reaktionsschmierstoffes in einem 300 ml-Erlenmeyerkolben genau eingewogen. Es erfolgt eine Zugabe von 60 ml Xylol zur Auflösung des Schmierstoffes. Diese Lösung wird in einem 250 ml Schütteltrichter insgesamt vier mal mit einer Mischung aus 10 ml vollentsalztem Wasser und 20 ml Ethanol ausgeschüttelt. Die abgetrennten Ethanol/Wasser-Phasen gibt man in einen 300 ml Erlenmeyerkolben und setzt ca. 2 ml einer Indikatorlösung, bestehend aus 0,1 Gew.% Bromkresolgrün und 99,9 Gew.% Ethanol, zu.

Danach erfolgt die Titration mit 0,1 m alkoholischer Kalilauge bis zum Farbumschlag von grün nach blau. Der Gehalt an Freier Säure ergibt sich zu:

$$\frac{\text{Verbrauch (ml) Kalilauge x 5,6}}{\text{Einwaage (g)}}.$$

Zur Titration der Gesamtsäure wiegt man ebenfalls ca. 1 g des Reaktionsschmiermittels in einem 300 ml-Erlenmeyerkolben genau ein und gibt 100 ml eines Lösungsmittelgemisches aus 0,1 Gew.% Alkaliblau (Indikator), 42,9 Gew.-% Xylol, 28,5 Gew.-% Ethanol und 28,5 Gew.-% Isopropanol zu. Nach vollständiger Auflösung des Schmierstoffes erfolgt die Titration mit 0,1 m alkoholischer Kalilauge bis zum Farbumschlag von blau nach rotviolett. Die Berechnung der Gesamtsäure ergibt sich zu:

$$\frac{\text{Verbrauch (ml) Kalilauge x 5,6}}{\text{Einwaage (g)}}.$$

Durch geeignete Wahl des sauren Phosphorsäureesters und/oder der Fettsäure sollte die Viskosität des wiedergewonnenen Reaktionsschmiermittels bei 60°C zwischen 8 und 1000 mm$^2$/sec liegen. Der bevorzugte Bereich für im Tauchverfahren anzuwendende Reaktionsschmiermittel liegt zwischen 8 und 100 mm$^2$/sec, für Umlaufprodukte bei 50 bis 500 mm$^2$/sec.

Beispiel:

Zur Vorbereitung für das Gleitziehen wurden blankgeglühte Stahlrohre mit einem handelsüblichen Reaktionsschmiermittel behandelt, das

| | |
|---|---|
| 53 Gew. % | Mineralöl der Viskosität 8 mPa · sec (bei 40°C) |
| 20 Gew. % | Ölsäure |

(fortgesetzt)

| 15 Gew. % | Oleylalkohol |
|-----------|--------------|
| 5 Gew. % | Oleylamin |
| 5 Gew. % | Polyphosphorsäure |
| 2 Gew. % | vollentsalztes Wasser |

enthielt und einen Gehalt an Freier Säure von 22 Punkten und von Gesamtsäure von 98 Punkten aufwies. Die Behandlung erfolgte im Tauchen bei einer Badtemperatur von 65°C für die Dauer von 10 min.

Während des Gleitziehens, das mit einer Querschnittsreduktion von 40% verbunden war, wurden von der äußeren wie von der inneren Oberfläche der Werkstücke Reste des Reaktionsschmiermittels abgestreift, die infolge der chemischen Reaktion zwischen Komponenten des Reaktionsschmiermittels mit der Substratoberfläche während der Tauchbehandlung, aber auch durch die Druck- und Temperaturbelastung während des Umformvorganges an Wirksamkeit verloren hatten. Das abgestreifte Reaktionsschmiermittel wies eine Gesamtpunktzahl von 57, eine Freie Säure Punktzahl von 8 auf, war eingedickt und als solches nicht mehr einsetzbar.

Die Vorbereitung zur Regenerierung des abgearbeiteten Reaktionsschmiermittels erfolgte in der Weise, daß es zunächst in Fässern gesammelt, auf 60°C erwärmt und danach über ein Filter mit einem Porendurchmesser von 200 μm in einen beheizbaren Rührkessel eingefüllt wurde.

Entsprechend der Verfahrensstufe a) wurden den im Rührkessel befindlichen Resten des Reaktionsschmiermittels 2 Gew. % Phosphorsäure zugesetzt und die resultierende Mischung bei einer Temperatur von 50 bis 65°C 1,5 Stunden lang gerührt, um das Eisen aus den metallorganischen Verbindungen zu fällen. Danach erfolgte ein Zusatz von 3 Gew. % vollentsalztem Wasser entsprechend Verfahrensstufe b), gefolgt von einem weiteren Rühren bei 50 bis 65°C für die Dauer von 1,5 Stunden, um wasserlösliche Verunreinigungen herauszulösen. Anschließend erfolgte die Abtrennung der festen Phase, vornehmlich Eisenphosphat, und der wasserhaltigen flüssigen Phase in einer Zentrifuge, die mit einer Beschleunigung von 10000 g arbeitete. Der so behandelte Zentrifugenaustrag wurde dann in einem Rührbehälter homogenisiert. Das Produkt wies eine Gesamtsäurepunktzahl von 43 und eine Freie Säure-Punktzahl von 5 auf. Nachdem die Reste des Reaktionsschmiermittels die Verfahrensstufe a), b) und c) durchlaufen hatten, wurden zur endgültigen Regenerierung 17 Gew. % eines sauren Phosphorsäureesters von Oleylalkohol zugesetzt. Auf diese Weise wird ein Reaktionsschmiermittelregenerat erhalten, das eine Gesamtsäurepunktzahl von 98 und eine Freie Säure-Punktzahl von 27 aufwies.

Das in der vorbeschriebenen Weise erhaltene Regenerat kann nach Einstellung des Wassergehaltes auf 2 Gew.-% sowohl für die Ergänzung vorhandener Reaktionsschmiermittelbäder als auch für deren Neuansatz verwendet werden.

**Patentansprüche**

1. Verfahren zur Regenerierung von bei der Kaltumformung abgestreiften, abgearbeiteten, sauren, organischen Schmierstoff sowie mehrwertige Metallionen und Phosphationen enthaltenden Reaktionsschmiermittelresten, **dadurch gekennzeichnet, daß** man den Reaktionsschmiermittelresten, die die Verfahrensstufen

   a) Fällung von Metallkationen aus metallorganischen Verbindungen durch Zugabe von Phosphorsäure und/ oder sauren Phosphorsäureestern

   b) Auflösen wasserlöslicher Verunreinigungen durch Zugabe von Wasser

   c) Abtrennung der Schmierstoffkomponente von Feststoffen und von mit der öligen Schmiermittelkomponente unverträglichen, wasserhaltigen Phasen
   durchlaufen haben,

   d) sauren Phosphorsäureester zur Einstellung der Freien Säure auf einen Wert von mindestens 10 Punkten sowie zur Einstellung einer Gesamtsäurepunktzahl von mindestens 70 unter Einstellung eines Verhältnisses von Freier Säure : Gesamtsäure auf einen Wert im Bereich von 0,1 bis 0,5

   zusetzt.

2. Verfahren nach Anspruch 1, **dadurch gekennzeichnet, daß** man die Abtrennung in Stufe c) mittels einer Zentrifuge bei 2000 bis 30000 g vornimmt.

3. Verfahren nach Anspruch 2, **dadurch gekennzeichnet, daß** man die Abtrennung in Stufe c) bei 8000 bis 15000 g vornimmt.

4. Verfahren nach Anspruch 1, 2 oder 3, **dadurch gekennzeichnet, daß** man zur Einstellung der Freien Säure zusätzlich Phosphorsäure zusetzt.

**Claims**

1. Method for the regeneration of acidic, organic lubricant stripped during the cold forming and processed, as well as reaction lubricant residues containing polyvalent metal ions and phosphate ions, **characterized in that**, there is added to the reaction lubricant residues, which have passed through the procedural steps:

   a) precipitating metal cations from metalorganic compounds by way of the addition of phosphoric acid and/or acid phosphoric acid esters,

   b) dissolving water-soluble impurities by way of the addition of water, and

   c) separating the lubricant component from solids and from aqueous phases which are incompatible with the oily lubricant component,

   d) acidic phosphoric acid ester to adjust the free acid to a value of at least 10 points and to adjust total acidity point number to at least 70, with the adjustment of the ratio of free acid : total acidity being to a value in the range of 0.1 to 0.5.

2. Method according to claim 1, **characterized in that** the separation in step c) is undertaken by means of a centrifuge at 2000 to 30000 g.

3. Method according to claim 2, **characterized in that** the separation in step c) is undertaken at 8000 to 15000 g.

4. Method according to claim 1, 2 or 3, **characterized in that** phosphoric acid is additionally added for the adjustment of the free acid.

**Revendications**

1. Procédé pour la régénération de résidus de lubrifiant réactif acide, épuisé, résultant de la déformation à froid de métaux, contenant du lubrifiant organique ainsi que des ions métalliques polyvalents et des ions phosphate, **caractérisé par le fait que** l'on ajoute à des résidus de lubrifiant réactif ayant subi les étapes de procédé (a), (b) et (c) suivantes :

   a) précipitation des cations métalliques provenant de composés organométalliques par addition d'acide phosphorique et/ou d'esters acides d'acide phosphorique,
   b) solubilisation d'impuretés hydrosolubles par addition d'eau, et
   c) séparation de la composante lubrifiante d'avec les matières solides et d'avec les phases aqueuses incompatibles avec la composante lubrifiante huileuse,
   d) un ester acide d'acide phosphorique afin d'ajuster la concentration d'acide libre à une valeur, au moins égale à 10 points, et afin d'ajuster la concentration globale d'acide à une valeur au moins 70 points, le rapport de la concentration d'acide libre à la concentration globale d'acides étant comprise entre 0,1 et 0,5.

2. Procédé selon la revendication 1, **caractérisé par le fait que** la séparation dans l'étape c) se fait au moyen d'une centrifugeuse à une vitesse comprise entre 2000 et 30 000 g.

3. Procédé selon la revendication 2, **caractérisé par le fait que** la séparation dans l'étape c) se fait à une vitesse comprise entre 8000 et 15000 g.

4. Procédé selon les revendications 1, 2 ou 3, **caractérisé par le fait que** l'on ajoute pour l'ajustement de la concentration en acide libre en plus de l'acide phosphorique.